# EUROPEAN PATENT APPLICATION

(11) **EP 4 542 463 A1**
(43) Date of publication of application: **23.04.2025**
(21) Application number: 22946838.4
(22) Date of filing: 15.06.2022
(51) Int. Cl.: G06N 20/00

(54) **TRAINING PROGRAM, TRAINING METHOD, AND INFORMATION PROCESSING DEVICE**

(71) Applicant: FUJITSU LIMITED, Kawasaki-shi, Kanagawa 211-8588 (JP)
(72) Inventor: HASEGAWA, Sou, Kawasaki-shi, Kanagawa 211-8588 (JP); HIROMOTO, Masayuki, Kawasaki-shi, Kanagawa 211-8588 (JP)
(74) Representative: Hoffmann Eitle
(86) International application number: PCT/JP2022/024037
(87) International publication number: WO 2023/243020

(57) **Abstract**

For first data that includes a first object feature amount and position information of each of a plurality of target objects in first image data, at least one second data is generated by substituting at least one first object feature amount of the plurality of target objects with a second object feature amount acquired for at least one other object classified into a same class as the target object in at least one second image data that is different from the first image data; and an encoder is trained by inputting the at least one second data to the encoder.

## Description

### Technical Field

The present invention relates to a training program, a training method, and an information processing apparatus.

### Background Art

A technology of generating a knowledge graph called a scene graph from image data is known. The scene graph includes information on a relationship between a plurality of target objects in the image data. In a case of generating the scene graph, a machine learning model for calculating the feature amount of the relationship between the target objects is trained by using supervised data (labeled data) including a correct answer label for the relationship between the target objects. From the viewpoint of increasing the information amount included in the scene graph, it is desirable to calculate a specific relationship rather than an abstract relationship between the plurality of target objects.

### Citation List

### Patent Literature

PTL 1: Japanese National Publication of International Patent Application No. 2022-508737

### Summary of Invention

### Technical Problem

Meanwhile, depending on a content of the prepared supervised data (labeled data), there is a concern that it is not easy to improve classification accuracy of the relationship by reflecting the specific relationship between the objects.

In one aspect, an object is to improve classification accuracy of a relationship by reflecting a specific relationship between a plurality of target objects in image data.

### Solution to Problem

In one aspect, a training program causes a computer to execute a process including: generating, for first data that includes a first object feature amount and position information of each of a plurality of target objects in first image data, at least one second data by substituting at least one first object feature amount of the plurality of target objects with a second object feature amount acquired for at least one other object classified into a same class as the target object in at least one second image data that is different from the first image data; and training an encoder by inputting the at least one second data to the encoder.

### Advantageous Effects of Invention

In one aspect, it is possible to improve classification accuracy of a relationship by reflecting a specific relationship between a plurality of target objects in image data.

### Brief Description of Drawings

[FIG. 1] FIG. 1 is a diagram describing a training process of an encoder in a technology in the related art.
[FIG. 2] FIG. 2 is a block diagram schematically illustrating a hardware configuration example of an information processing apparatus according to an embodiment.
[FIG. 3] FIG. 3 is a diagram describing a definition of a scene graph.
[FIG. 4] FIG. 4 is a diagram schematically illustrating an example of the scene graph.
[FIG. 5] FIG. 5 is a diagram illustrating an example of self-supervised learning.
[FIG. 6] FIG. 6 is a diagram illustrating an example of contrastive learning.
[FIG. 7] FIG. 7 is a block diagram schematically illustrating a first example of a software configuration in a training phase of the encoder by the information processing apparatus illustrated in FIG. 2.
[FIG. 8] FIG. 8 is a diagram illustrating an example of a training process of an object detector by the information processing apparatus illustrated in FIG. 2.
[FIG. 9] FIG. 9 is a diagram illustrating an example of a training process of the encoder by the information processing apparatus illustrated in FIG. 2.
[FIG. 10] FIG. 10 is a diagram illustrating an example of a process of using contrastive learning in the training process of the encoder in FIG. 9.
[FIG. 11] FIG. 11 is a block diagram schematically illustrating a second example of the software configuration in the training phase of the encoder by the information processing apparatus illustrated in FIG. 2.
[FIG. 12] FIG. 12 is a block diagram schematically illustrating an example of a software configuration in a training phase of a classifier by the information processing apparatus illustrated in FIG. 2.
[FIG. 13] FIG. 13 is a diagram illustrating an example of a training process of the classifier by the information processing apparatus illustrated in FIG. 2.
[FIG. 14] FIG. 14 is a block diagram schematically illustrating an example of a software configuration in an inference phase by the information processing apparatus illustrated in FIG. 2.
[FIG. 15] FIG. 15 is a flowchart describing an example of a training process of the encoder in the training phase of the information processing apparatus illustrated in FIG. 2.
[FIG. 16] FIG. 16 is a flowchart describing an example of a training process of the classifier in the training phase of the information processing apparatus illustrated in FIG. 2.
[FIG. 17] FIG. 17 is a flowchart illustrating an example of a creation process of a scene graph in the inference phase of the information processing apparatus illustrated in FIG. 2.
[FIG. 18] FIG. 18 is a diagram illustrating an example of a result of a reproducibility of a relationship label by the information processing apparatus illustrated in FIG. 2.

### Description of Embodiments

### [A] Example in Related Art

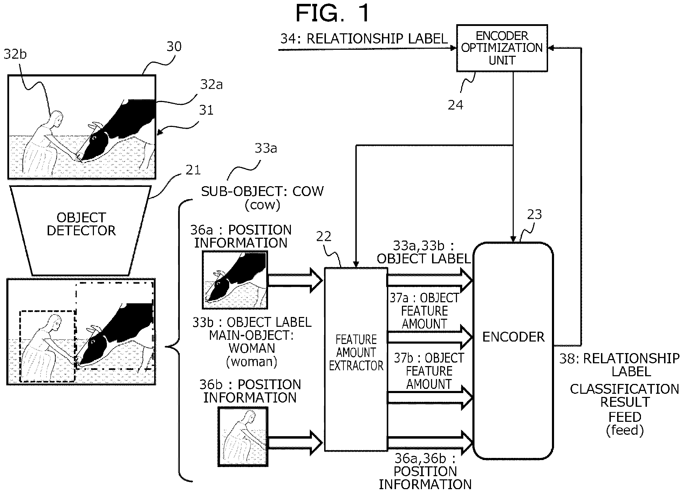

FIG. 1 is a diagram describing a training process on an encoder 23 in a technology in the related art.

In the technology in the related art, the encoder 23 is trained with supervised learning using a deep neural network (DNN).

As input image data, labeled data 30 is used. The labeled data 30 is also referred to as supervised data.

The labeled data 30 includes image data 31. In an example illustrated in FIG. 1, a plurality of target objects 32a (cow) and 32b (woman) exist in the image data 31. The labeled data 30 may include object labels 33a and 33b, and a relationship label 34. The object labels 33a and 33b are information indicating a type (class) of each of the plurality of target objects 32a and 32b in the image data 31. In FIG. 1, the object label 33a is "cow", and the object label 33b is "woman". The relationship label 34 is information indicating a relationship between the plurality of target objects 32a and 32b, and is "feed" in FIG. 1.

A trained object detector 21 acquires the object labels 33a and 33b and position information 36a and 36b of the respective target objects 32a and 32b, from the labeled data 30. The target objects 32a and 32b may include a main-object and a sub-object. In the present example, the object label 33a and the position information 36a are acquired for the "cow" which is a sub-object. In the same manner, the object label 33b and the position information 36b are acquired for the "woman" which is a main-object.

A feature amount extractor 22 calculates a first object feature amount 37a for the target object 32a (sub-object) and a first object feature amount 37b for the target object 32b (main-object) based on the position information 36a and 36b occupied by the target objects 32a and 32b, respectively.

The encoder 23 outputs a classification result 38 of a relationship label based on the first object feature amount 37a of the sub-object and the first object feature amount 37b of the main-object. In the present example, the encoder 23 outputs the classification result 38 of the relationship label "feed". An encoder optimization unit 24 compares the classification result 38 of the relationship label output from the encoder 23 with the relationship label 34 as a correct answer of the labeled data 30, and trains the encoder 23 to reduce an error between the classification result 38 and the relationship label 34.

In the technology in the related art, it is necessary to prepare the labeled data 30. In a case where the prepared labeled data 30 has a bias in the relationship label 34 as the correct answer, it is not easy to increase training accuracy of the encoder 23. In the example, there is a case where an appearance frequency of an abstract relationship such as "on" or "have" is higher than an appearance frequency of a specific relationship such as "sitting on" or "walking on". In this case, it is not easy to assign a relationship label in consideration of the specific relationship.

A method of considering the specific relationship by increasing a variation of the labeled data 30 can be considered. Meanwhile, increasing the number of pieces of data of the labeled data 30 having the relationship label 34 increases a burden on an operator.

In that respect, it is considered to adopt self-supervised learning in which the encoder 23 is trained by using not only the labeled data 30 but also unlabeled data, particularly, contrastive learning.

### [B] Embodiment

Hereinafter, an embodiment will be described with reference to the drawings. Meanwhile, the following embodiment is merely an example, and the intention is not to exclude various modification examples and the application of the technology not described in the embodiment. That is, the present embodiment can be implemented with various modifications without departing from spirit of the present embodiment. In addition, the present embodiment is not limited to the components illustrated in each of the drawings, and the components can include other functions or the like.

Hereinafter, in the drawings, the same respective reference numerals denote the same portions, and the description thereof will be omitted.

### [B-1] Configuration Example

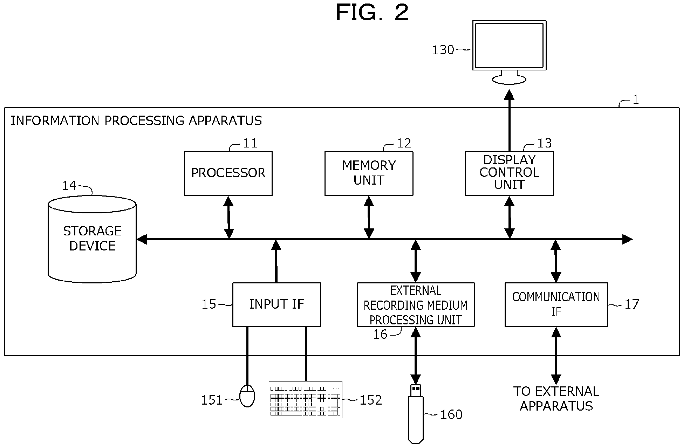

FIG. 2 is a block diagram schematically illustrating a hardware configuration example of an information processing apparatus 1 according to the embodiment.

The information processing apparatus 1 is a computer. As illustrated in FIG. 2, the information processing apparatus 1 includes a processor 11, a memory unit 12, a display control unit 13, a storage device 14, an input interface (IF) 15, an external recording medium processing unit 16, and a communication IF 17.

The memory unit 12 is an example of a storage unit, and is, for example, a read-only memory (ROM), a random-access memory (RAM), or the like. A program such as a Basic Input/Output System (BIOS) may be written in the ROM of the memory unit 12. A software program of the memory unit 12 may be appropriately read into and executed by the processor 11. In addition, the RAM of the memory unit 12 may be used as a temporary recording memory or a working memory.

The display control unit 13 is coupled to a display device 130, and controls the display device 130. The display device 130 is a liquid crystal display, an organic light-emitting diode (OLED) display, a cathode ray tube (CRT), an electronic paper display, or the like, and displays various types of information for an operator or the like. The display device 130 may be combined with an input device, or may be, for example, a touch panel.

The storage device 14 is a storage device having high IO performance, and for example, dynamic random-access memory (DRAM), a solid-state drive (SSD), a storage class memory (SCM), or a hard disk drive (HDD) may be used.

The input IF 15 may be coupled to an input device, such as a mouse 151 or a keyboard 152, and may control the input device, such as the mouse 151 or the keyboard 152. The mouse 151 and the keyboard 152 are examples of the input devices, and the operator performs various input operations via these input devices.

The external recording medium processing unit 16 is configured such that a recording medium 160 can be mounted. The external recording medium processing unit 16 is configured such that information recorded on the recording medium 160 can be read in a state in which the recording medium 160 is mounted. In the present example, the recording medium 160 has portability. For example, the recording medium 160 is a flexible disk, an optical disk, a magnetic disk, an optical magnetic disk, a semiconductor memory, or the like.

The communication IF 17 is an interface for enabling communication with an external apparatus.

The processor 11 is a processing device that performs various types of control and computation. The processor 11 may include a central processing unit (CPU). In addition, the processor 11 may include a discrete graphics processing unit (dGPU), and the dGPU means a GPU that exists over a graphic chip or a graphic board that is independent of the CPU. The processor 11 realizes various functions by executing an operating system (OS) or a program read in the memory unit 12. The processor 11 may realize a function as a control unit 100, which will be described below.

A device for controlling the operation of the entire information processing apparatus 1 is not limited to the CPU and the dGPU, and may be, for example, any one of an MPU, a DSP, an ASIC, a PLD, and an FPGA. In addition, the device for controlling the operation of the entire information processing apparatus 1 may be a combination of two or more types of the CPU, the MPU, the DSP, the ASIC, the PLD, and the FPGA. The MPU is an abbreviation for a micro processing unit, the DSP is an abbreviation for a digital signal processor, and the ASIC is an abbreviation for an application-specific integrated circuit. In addition, PLD is an abbreviation for a programmable logic device, and FPGA is an abbreviation for a field-programmable gate array.

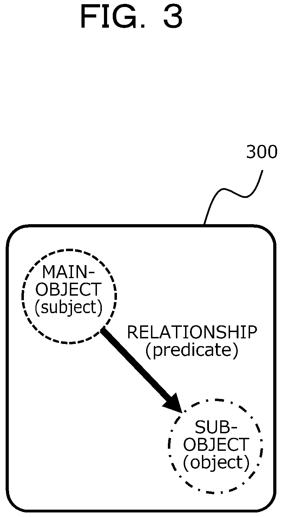

FIG. 3 is a diagram describing a definition of a scene graph 300. The scene graph 300 is a directed graph in which objects (target objects) in an image or a moving image are represented by nodes and a relationship between the target objects is represented by an edge. The image and the moving image are examples of image data. The target object (object) may be a living organism including a person, an article, or a part of the living organism or the article.

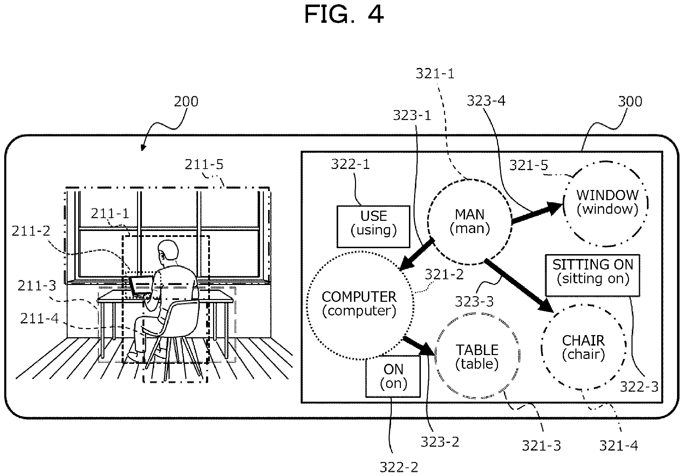

FIG. 4 is a diagram schematically illustrating an example of the scene graph 300. A data set illustrated in FIG. 4 includes image data 200 and the scene graph 300. In FIG. 4, a man, a computer, a table, a chair, and a window exist as target objects in the image data 200. Position information 211-1 to 211-5 of the respective target objects are given. The position information 211 may have information on coordinates (x, y), a height, and a width. The position information 211 may be represented by a bounding box. The bounding box is a rectangular box surrounding the target object.

The scene graph 300 includes an object label 321-1 (man), an object label 321-2 (computer), an object label 321-3 (table), an object label 321-4 (chair), and an object label 321-5 (window). In addition, relationships between the respective target objects are illustrated by directed edges 323-1 to 328-4. The directed edge 323 may be a line with an arrow.

As information indicating a relationship between the man and the computer, a relationship label 322-1 is illustrated to be "using". A relationship label 322-2 between the computer and the table is illustrated to be "on", and a relationship label 322-3 between the man and the chair is illustrated to be "sitting on".

The relationship label 322 can increase the information amount of the scene graph 300 by indicating a specific relationship (for example, sitting on or standing on) rather than an abstract relationship (for example, on).

The information processing apparatus 1 according to the present embodiment improves classification accuracy of the relationship by reflecting the specific relationship between a plurality of target objects in the image data. For this reason, the information processing apparatus 1 uses self-supervised learning, particularly, a contrastive learning method.

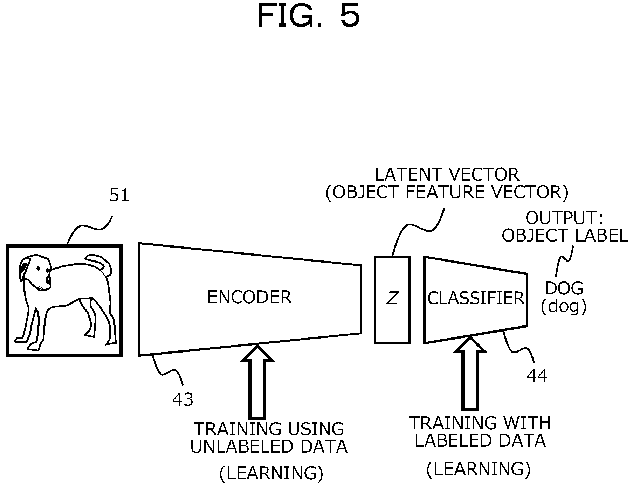

FIG. 5 is a diagram illustrating an example of self-supervised learning. In FIG. 5, as a simple example, a case is described in which image data in which a dog appears is input as input data 51, and an object label "dog" is output as output.

In a case where the input data 51 is input to an encoder 43, the encoder 43 outputs a latent vector (in FIG. 5, an object feature vector) Z. The latent vector Z is input to a classifier 44, and the classifier 44 outputs a label.

The self-supervised learning has a two-stage training (learning) step. In a first stage, the encoder 43 is trained by using unlabeled data. The unlabeled data has a smaller generation burden than labeled data. Therefore, the number of pieces of data can be increased in a case of training using the unlabeled data, as compared with a case of training using the labeled data. Therefore, the encoder 43 can learn many variations, and can increase training accuracy (learning accuracy).

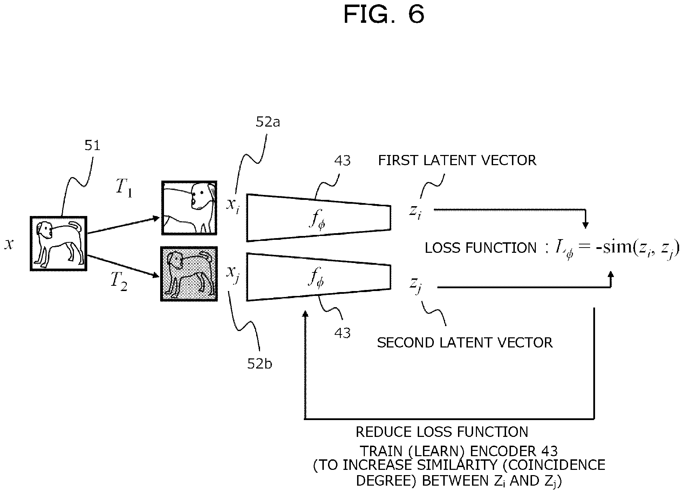

FIG. 6 is a diagram illustrating an example of contrastive learning. The contrastive learning is a kind of self-supervised learning. In FIG. 6, as a simple example, a case is described in which image data in which a dog appears is input as the input data 51, and an object label "dog" is output as an output.

Two pieces of extension data xᵢ to T₁(x) and xⱼ to T₂(x) are obtained from an input x (the input data 51) by two types of data extension (T₁, T₂). The data extension is obtained, for example, by executing deformation by parallel movement, rotation, enlargement and reduction, up and down inversion, left and right inversion, brightness adjustment, and a combination of a plurality of these on an original image.

Pieces of data obtained by the two types of data extension are input to the encoders 43 (f_{Φ}), respectively, to obtain two latent vectors zᵢ = f_{Φ}(xᵢ) (first latent vector) and zⱼ = f_{Φ}(xⱼ) (second latent vector).

The two pieces of extension data xᵢ to T₁(x) and xⱼ to T₂(x) are data on which different deformations are performed without changing the essence of the object. The two latent vectors zᵢ = f_{Φ}(xᵢ) and zj = f_{Φ}(xⱼ) match or are similar to each other, by the fact that the essence of the object is not changed. Therefore, in the contrastive learning, the encoder 43 is trained by machine learning such that a coincidence degree (similarity) between the two latent vectors zᵢ = f_{Φ}(xᵢ) and zⱼ = f_{Φ}(xⱼ) is increased. In the example, a loss function L_{φ} = -sim(zᵢ, zⱼ) is calculated, and a parameter φ may be updated such that this value is minimized.

In FIGs. 5 and 6, a case of training the encoder 43 that outputs the object label of the target object is described, and in the information processing apparatus 1 of the present embodiment, training of an encoder 143 that calculates the relationship between the plurality of target objects is performed by using the contrastive learning. The encoder 143 is an example of an encoder that calculates a relationship between a plurality of target objects.

### [B-1-1] Training Phase

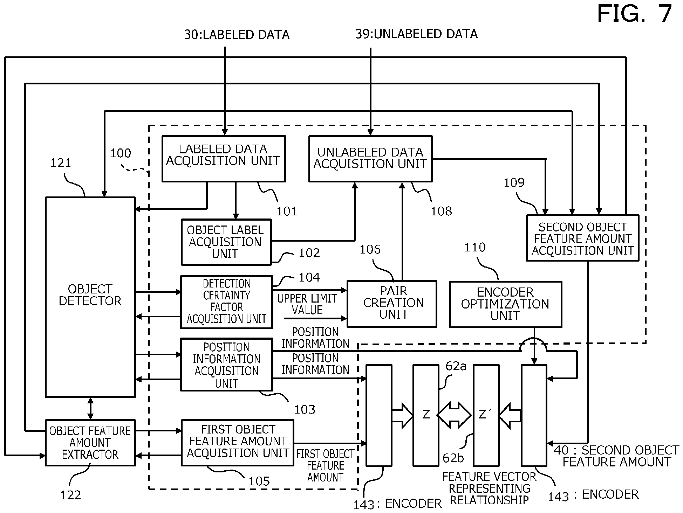

FIG. 7 is a block diagram schematically illustrating a first example of a software configuration in a training phase of an encoder by the information processing apparatus 1 illustrated in FIG. 2.

The control unit 100 may include a labeled data acquisition unit 101, an object label acquisition unit 102, a position information acquisition unit 103, a detection certainty factor acquisition unit 104, a first object feature amount acquisition unit 105, a pair creation unit 106, an unlabeled data acquisition unit 108, a second object feature amount acquisition unit 109, and an encoder optimization unit 110.

The control unit 100 realizes a learning process (training process) in machine learning using training data. That is, the information processing apparatus 1 functions as a training apparatus that trains a machine learning model by the control unit 100.

In the present example, an object detector 121, an object feature amount extractor 122, and the encoder 143 are examples of the machine learning model. The machine learning model may be, for example, a deep learning model (deep neural network). The neural network may be a hardware circuit, or may be a virtual network by software that is coupled to a hierarchy virtually constructed over a computer program by the processor 11 or the like.

The labeled data acquisition unit 101 acquires the labeled data 30. The labeled data 30 may be a data set including image data, an object label, and a relationship label. The acquired labeled data 30 may be input to the object detector 121.

The object detector 121 may be an existing object detector based on a DNN. For example, the object detector 121 may be a faster region-based convolutional neural network (FasterRCNN) or may be a detection transformer (DETR). A detailed description of the object detector 121 itself will be omitted.

The object label acquisition unit 102 respectively acquires the object labels 33a and 33b of the target objects 32a and 32b in image data from the labeled data 30. The labeled data 30, the image data 31, the target objects 32a and 32b, the object labels 33a and 33b, the relationship label 34, the position information 36a and 36b, and the object feature amounts 37a and 37b may be the same as the technology in the related art illustrated in FIG. 1.

The position information acquisition unit 103 acquires the position information 36a and 36b of the respective target objects 32a and 32b in the image data 31. The position information acquisition unit 103 acquires the position information 36a and 36b by using the object detector 121.

The detection certainty factor acquisition unit 104 acquires a certainty factor (detection certainty factor) for a specifying result of the object labels 33a and 33b by the object detector 121. The detection certainty factor may be a probability that, in a case where a plurality of bounding boxes are specified in the image data 31, a predicted label (for example, a cow) for each of the bounding boxes is an actual label of the target object. The detection certainty factor acquisition unit 104 acquires the detection certainty factor by using the object detector 121.

The first object feature amount acquisition unit 105 acquires the first object feature amounts 37a and 37b, which are object feature amounts for the target objects 32a and 32b, based on the position information 36a and 36b. The first object feature amounts 37a and 37b are examples of a first object feature amount.

In the example, the position information 36a and 36b specified by the object detector 121 are input to the object feature amount extractor 122, respectively. The object feature amount extractor 122 specifies the object feature amounts 37a and 37b, based on image data in the bounding boxes, which are the position information 36a and 36b. The object detector 121 and the object feature amount extractor 122 may be formed as one machine learning model. The first object feature amount acquisition unit 105 may acquire the object feature amounts 37a and 37b by using the object feature amount extractor 122.

The pair creation unit 106 creates a pair of a main-object and a sub-object in the plurality of target objects 32a and 32b, based on the detection certainty factor and a predetermined pair upper limit count. The pair creation unit 106 may extract only a pair that is generated between a correct answer rectangle and a covered rectangle, in the predicted bounding box (rectangle). In the example, in a case of the image data of FIG. 4, the pair creation unit 106 creates "man and computer", "computer and table", "man and chair", and "man and window" as pairs of the main-object and the sub-object.

The unlabeled data acquisition unit 108 acquires unlabeled data 39, which is image data including at least one other object classified into the same class as at least the one target object 32a among the target objects 32a and 32b (a plurality of target objects forming a pair of the main-object and the sub-object).

The unlabeled data acquisition unit 108 may extract an image including the same label from an external data set, by using any of an object label of any of the main-object and the sub-object as a key.

The unlabeled data 39 is data that does not have a relationship label between the plurality of target objects. For example, the unlabeled data acquisition unit 108 can acquire image data classified into the same class "cow" as the target object 32a, that is, image data of the cow. The unlabeled data acquisition unit 108 can widely acquire a large amount of unlabeled data 39 from an outside of the information processing apparatus 1 via the Internet.

The second object feature amount acquisition unit 109 acquires a second object feature amount 40, which is an object feature amount for the object in the unlabeled data 39. The second object feature amount 40 is an example of a second object feature amount.

In the example, the second object feature amount acquisition unit 109 acquires the second object feature amount 40 based on image data in a bounding box corresponding to an object in the unlabeled data 39. The second object feature amount acquisition unit 109 may acquire the second object feature amount 40 by using the object detector 121 and the object feature amount extractor 122.

The control unit 100 acquires first data including the first object feature amount 37a of the sub-object, the first object feature amount 37b of the main-object, the position information 36a of the sub-object, and the position information 36b of the main-object, by the position information acquisition unit 103 and the first object feature amount acquisition unit 105. The control unit 100 generates second data in which at least one of the first object feature amount 37a of the sub-object and the first object feature amount 37b of the main-object in the first data is substituted with another second object feature amount 40 by the position information acquisition unit 103 and the second object feature amount acquisition unit 109. The control unit 100 trains the encoder 143 by inputting the second data as extension data during encoder training using contrastive learning.

The encoder 143 may be configured with a multilayer perceptron (MLP), for example. In this case, the encoder 143 is configured with at least three node layers. The training (learning) of the encoder 143 may be performed by using a learning method called backpropagation (error backpropagation method).

The encoder optimization unit 110 may acquire a first latent vector 62a (Z) for a relationship between the plurality of target objects 32a and 32b, which is obtained by inputting the first data to the encoder 143. The encoder optimization unit 110 may acquire a second latent vector 62b (Z') for a relationship between the plurality of target objects 32a and 32b, which is obtained by inputting the second data to the encoder 143.

The encoder optimization unit 110 may train the encoder 143 with machine learning to increase a coincidence degree (similarity) between the first latent vector 62a (Z) and the second latent vector 62b (Z'). The first latent vector 62a (Z) is an example of a first relationship feature amount for the relationship between the plurality of target objects 32a and 32b, and the second latent vector 62b (Z) is an example of a second relationship feature amount for the relationship between the plurality of target objects 32a and 32b. A function used as a criterion for evaluating the coincidence degree (similarity) may be a function used in contrastive learning (SimCLR or the like) (InforNCE or the like).

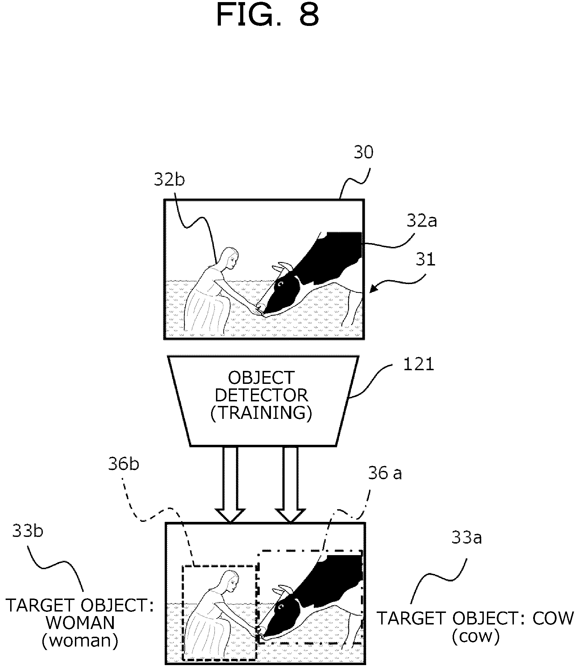

FIG. 8 is a diagram illustrating an example of a training process of the object detector 121 by the information processing apparatus 1 illustrated in FIG. 2. In the training of the object detector 121, the image data 31 and the labeled data 30 including a correct answer label and correct answer position information for the object labels 33a and 33b of the target objects 32a and 32b in the image data 31 are input to the object detector 121. The labeled data 30 may be a data set such as visual genome in the example.

The object detector 121 respectively outputs the object labels 33a and 33b and the position information 36a and 36b of the target objects 32a and 32b, based on the image data 31. The object detector 121 may also output the detection certainty factor as described in FIG. 7.

The position information 36a and 36b may have information on plane coordinates (x, y), a height (h), and a width (w). The plane coordinates may be coordinates of one vertex of a bounding box (rectangle). The height (h) may be a length of a side of the bounding box in an x-direction, and the width (w) may be a length of a side of the bounding box in a y-direction parallel with the x-direction.

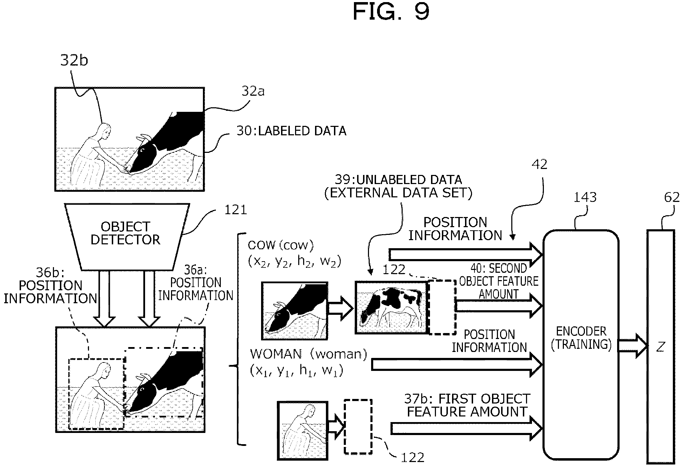

FIG. 9 is a diagram illustrating an example of a training process of the encoder 143 by the information processing apparatus 1 illustrated in FIG. 2. After the training of the object detector 121 is completed, a parameter of the object detector 121 is fixed. A case where the parameter of the object detector 121 is fixed is referred to as "freezing" in some cases.

Second data in which at least one of the first object feature amount 37a of the sub-object or the first object feature amount 37b of the main-object is substituted with the second object feature amount 40 is generated from first data including the first object feature amount 37a of the sub-object (not illustrated in FIG. 9), the first object feature amount 37b of the main-object, the position information 36a of the sub-object, and the position information 36b of the main-object.

In FIG. 9, a case is illustrated in which second data 42 is generated by substituting the first object feature amount 37a with the second object feature amount 40, and the first object feature amount 37b may be substituted with the second object feature amount 40. In addition, both the first object feature amount 37a and the first object feature amount 37b may be substituted with the second object feature amount 40.

In the generation of the second data 42, the unlabeled data 39 which does not include a relationship label can be used. The unlabeled data 39 may be image data (image data of a cow and image data of a woman) classified into at least one class (a cow, a woman, or the like) of the target object 32a or the target object 32b. Therefore, an external data set that can be used as the unlabeled data 39 exists in a large amount in the Internet space. Therefore, the encoder 143 can be trained (learned) by using the large amount of data without the relationship label.

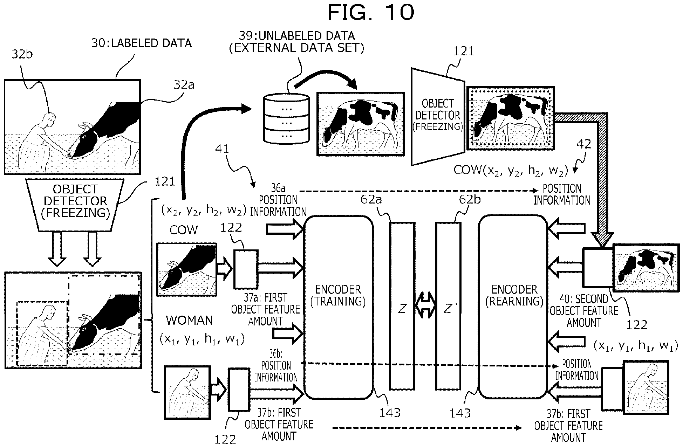

FIG. 10 is a diagram illustrating an example of a process of using contrastive learning in a training process of the encoder 143 in FIG. 9. In FIG. 10, first data 41 including the first object feature amount 37a of the sub-object, the first object feature amount 37b of the main-object, the position information 36a of the sub-object, and the position information 36b of the main-object, and the second data 42 in which the first object feature amount 37a is substituted with the second feature amount 40 are input to the encoder 143.

The encoder 143 outputs the first latent vector 62a (the relationship feature vector Z) based on the input of the first data 41. In addition, the encoder 143 outputs the second latent vector 62b (the relationship feature vector Z') based on the input of the second data 42. In other words, the second latent vector 62b (Z') is obtained by data extension of the first data 41, which is the input to the encoder 143.

In the second data 42 obtained by the data extension, the position information 36a and 36b are the same as the first data 41, which is an original input. A class of another object in the second data 42 (for example, the cow) is the same as a class of the sub-object (the target object 32a) in the first data 41. The object feature amount of the target object 32b, which is the main-object in the second data 42, is the same as the object feature amount of the target object 32b in the first data 41. Therefore, an essential portion (the position information and the object label) of the relationship between the target objects in the first data 41 and the relationship between the target objects in the second data 42 are maintained. Therefore, the first latent vector 62a (the relationship feature vector Z) and the second latent vector 62b (the relationship feature vector Z') are to be similar to each other. Contrastive learning is performed on the encoder 143 such that the coincidence degree (similarity) between the first latent vector 62a (Z) and the second latent vector 62b (Z') is increased.

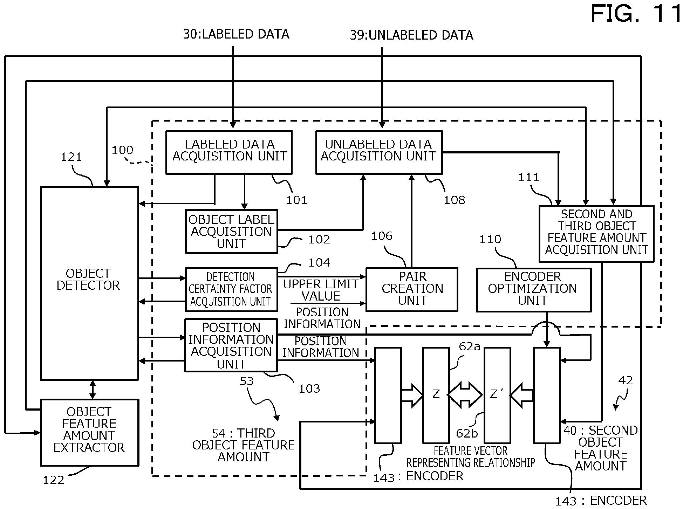

FIG. 11 is a block diagram schematically illustrating a second example of the software configuration in the training phase of the encoder 143 by the information processing apparatus 1 illustrated in FIG. 2.

Second data and third data may be generated from the first data 41 by two types of data extension, in the same manner in which the two pieces of extension data are obtained from the input x by two types of data extension (T1, T2), in the description with reference to FIG. 6.

In FIG. 11, a second and third object feature amount acquisition unit 111 is provided, instead of the second object feature amount acquisition unit 109 in FIG. 7.

In FIG. 11, the control unit 100 generates the second data 42 as data in which at least one of the first object feature amount 37a of the sub-object or the first object feature amount 37b of the main-object is substituted with the other second object feature amount 40 corresponding to the main-object or the sub-object, in the first data 41.

Further, the control unit 100 generates third data 53 as data in which at least one of the first object feature amount 37a of the sub-object or the first object feature amount 37b of the main-object is substituted with the other third object feature amount 54 corresponding to the main-object or the sub-object, in the first data 41. In the second data 42 and the third data 53 as well, the position information 36a and 36b of the first data may be maintained as the position information 36a and 36b.

The generation of the third object feature amount 54 and the third data 53 has the same manner as the generation of the second object feature amount 40 and the second data 42.

According to the processing illustrated in FIG. 11, the unlabeled data 39 without a relationship label can be used without being restricted by the number of pieces of data of the labeled data 30. The number of pieces of data for training the encoder 143 can be increased.

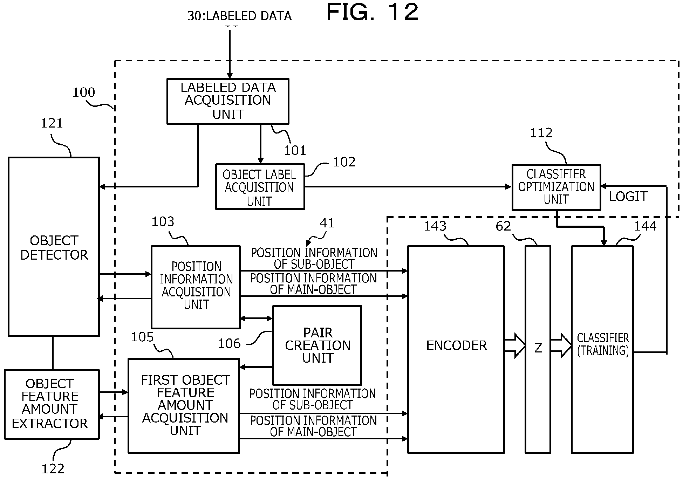

FIG. 12 is a block diagram schematically illustrating an example of a software configuration in a training phase of a classifier 144 by the information processing apparatus 1 illustrated in FIG. 2. In FIG. 12, a state is illustrated in which training of the object detector 121 and the encoder 143 is completed and a parameter is fixed.

The control unit 100 may include the labeled data acquisition unit 101, the object label acquisition unit 102, the position information acquisition unit 103, the first object feature amount acquisition unit 105, the pair creation unit 106, and a classifier optimization unit 112.

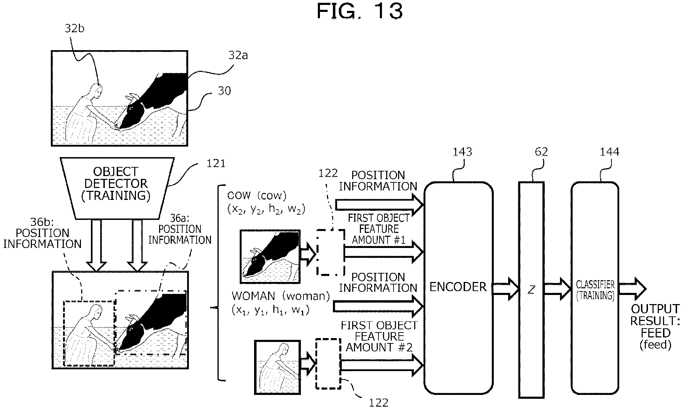

FIG. 13 is a diagram illustrating an example of a training process of the classifier 144 by the information processing apparatus 1 illustrated in FIG. 2. The first object feature amount 37a of a sub-object, the first object feature amount 37b of a main-object, the position information 36a of the sub-object, and the position information 36b of the main-object are acquired. Each of the acquired data is input to the encoder 143.

In the present example, the classifier 144 is used as an example of a machine learning model. The classifier 144 may be, for example, a deep learning model (deep neural network). The neural network may be a hardware circuit, or may be a virtual network by software that is coupled to a hierarchy virtually constructed over a computer program by the processor 11 or the like. In the example, the classifier 144 may be logistic regression, which is an identification model configured with only one fully coupled layer, or may be a multilayer perceptron (MLP) having a plurality of layers.

The control unit 100 acquires the first object feature amount 37a of the sub-object, the first object feature amount 37b of the main-object, the position information 36a of the sub-object, and the position information 36b of the main-object, by the position information acquisition unit 103 and the first object feature amount acquisition unit 105. Each of the acquired data is input to the encoder 143.

The control unit 100 calculates a latent vector 62 (Z) by using the encoder 143. The latent vector Z indicates a position in a latent space.

The latent vector 62 (Z) is input to the classifier 144. The classifier 144 outputs a logit. The logit may be a non-normalized final score for classification of a relationship label. The logit may be converted into a prediction value of the relationship label by using a Softmax function or the like.

The classifier optimization unit 112 optimizes a parameter of the classifier 144, based on a correct answer label and the logit of the relationship label in the labeled data 30.

In the training of the encoder 143, the number of pieces of data is increased by using the unlabeled data 39, while in the training of the classifier 144, the unlabeled data 39 may not be used.

### [B-1-2] Inference Phase

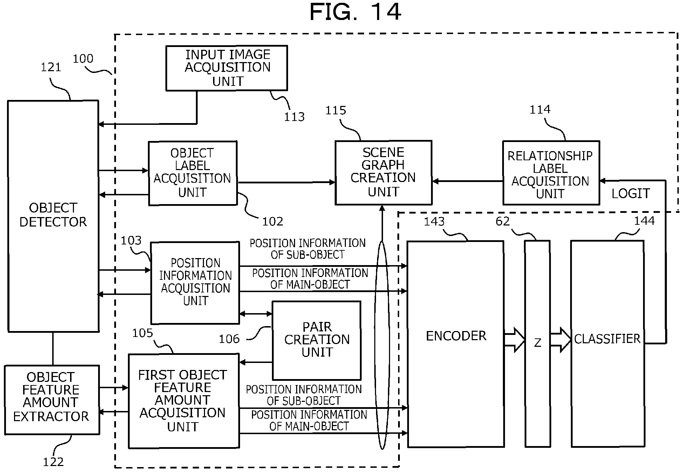

FIG. 14 is a block diagram schematically illustrating an example of a software configuration in an inference phase by the information processing apparatus 1 illustrated in FIG. 2.

The control unit 100 may include the object label acquisition unit 102, the position information acquisition unit 103, the first object feature amount acquisition unit 105, the pair creation unit 106, an input image acquisition unit 113, a relationship label acquisition unit 114, and a scene graph creation unit 115. The object label acquisition unit 102, the position information acquisition unit 103, the first object feature amount acquisition unit 105, and the pair creation unit 106 may have the same functions as the functions described using FIG. 7, except that data as a processing target is input image data, instead of the labeled data 30 for training.

The input image acquisition unit 113 acquires the input image data, which is a processing target. The input image data of the processing target is input to the trained object detector 121. The object detector 121 is used to acquire object labels and position information of target objects (main-object and sub-object) in the input image data. The object feature amounts of the target objects (main-object and sub-object) are acquired by using the object feature amount extractor 122.

The encoder 143 receives the position information and the object feature amounts of the target objects (main-object and sub-object) in the input image data. The encoder 143 infers the latent vector 62 (Z) based on the position information and the object feature amounts of the target objects (main-object and sub-object). The latent vector 62 (relationship feature vector) indicates a relationship between a plurality of target objects (between the sub-object and the main-object).

The latent vector 62 is input to the classifier 144. The classifier 144 outputs a logit in the example. The relationship label acquisition unit 114 acquires a relationship label indicating the relationship between the plurality of target objects (sub-object and main-object) by using a logit.

The scene graph creation unit 115 creates the scene graph 300. The scene graph creation unit 115 collects the object labels of the main-object and the sub-object acquired from the input image data by the object label acquisition unit 102, and the relationship labels of the main-object and the sub-object acquired from the input image data by the relationship label acquisition unit 114 as the scene graph 300.

In the present embodiment, in the training of the encoder 143 to obtain the relationship between the plurality of target objects, data extension is performed by replacing the object feature amount of at least one of the main-object or the sub-object in the first data 41 with the object feature amount of another object of the same class. The encoder 143 can learn many variations, and can increase training accuracy.

### [B-2] Operation Example

### [B-2-1] Learning Phase

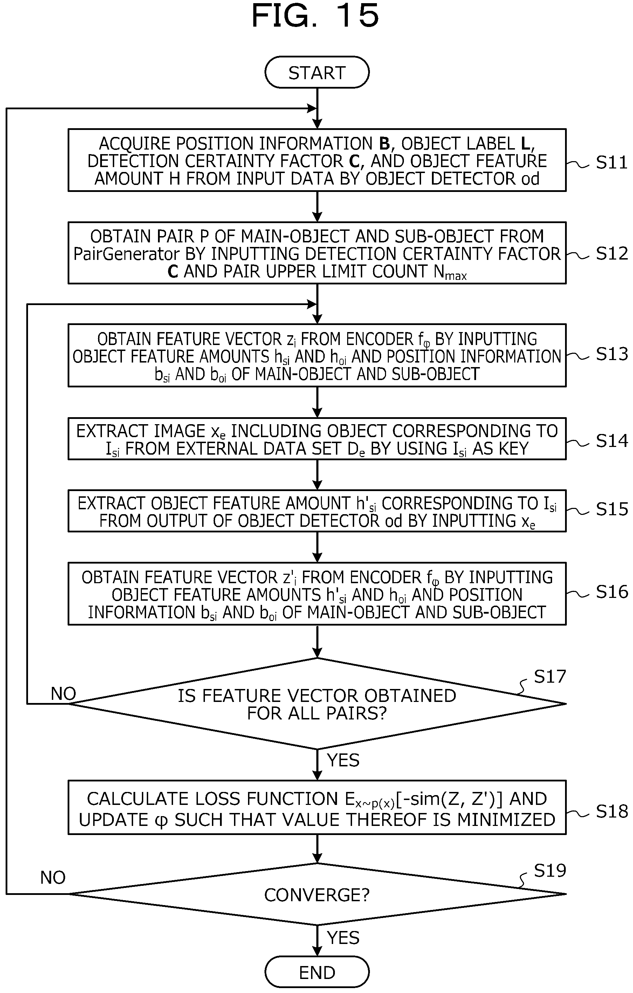

An example of a training process of the encoder 143 in a training phase of the information processing apparatus 1 illustrated in FIG. 2 will be described with reference to a flowchart (steps S11 to S19) illustrated in FIG. 15.

The control unit 100 acquires the position information 36a and 36b (B) of the target objects 32a and 32b in image data, the object labels 33a and 32b (L), a detection certainty factor C, and the first object feature amounts 37a and 37b (H) from the input labeled data 30 (x) (step S11). The control unit 100 acquires each value by inputting the labeled data 30 to the object detector 121 (od). The first object feature amounts 37a and 37b (H) are acquired by using the object feature amount extractor 122.

The input x is defined as x ∈ labeled data (image data set) Di.

The position information (including coordinate information) B (b₁, b₂, ..., bᵢ, ..., and b_{N}) = od(x)

The object label L (l₁, l₂, ..., lᵢ, ..., and l_{N}) = od(x)

The detection certainty factor C (c₁, c₂, ..., cᵢ, ..., and c_{N}) = od(x)

The first object feature amount H (h₁, h₂, ..., hᵢ, ..., and h_{N}) = od(x)

The detection certainty factor C and the pair upper limit count Nmax are input to the pair creation unit 106 (PairGenerator). The pair creation unit 106 generates a pair P of a main-object and a sub-object from target objects 32 (step S12).

P = PairGenerator(C, Nmax)
P = (P₁, P₂, ..., Pᵢ, ..., and P_{Nmax}) where Pᵢ = (sᵢ, oᵢ)
sᵢ is an index of the main-object of the i-th pair, and oᵢ is an index of the sub-object of the i-th pair.

The control unit 100 generates the pair P of the main-object and the sub-object from among the plurality of target objects 32 (step S12). The first object feature amounts hₛᵢ and hₒᵢ of the main-object and the sub-object and the position information bₛᵢ and bₒᵢ are input to the encoder 143. The first latent vector 62a, which is a feature vector Zᵢ, is calculated from the encoder 143 (f_{φ}) (step S13). The first object feature amounts hₛᵢ and hₒᵢ of the main-object and the sub-object and the position information bₛᵢ and bₒᵢ are examples of first data.

In FIG. 15, the unlabeled data acquisition unit 108 extracts an image Xe (the unlabeled data 39) including another object corresponding to lₛᵢ from an external data set De, by using the object label lₛᵢ of the main-object as a key (step S14). Meanwhile, the unlabeled data acquisition unit 108 may extract the image Xe (the unlabeled data 39) including still another object corresponding to lₒᵢ from the external data set De, by using the object label lₒᵢ of the sub-object as a key. The unlabeled data acquisition unit 108 may extract the image Xe including the another object corresponding to the object label lₛᵢ from the external data set De and the image Xe including the still another object corresponding to the object label lₒᵢ from the external data set De, by using both of the object labels lₛᵢ and lₒᵢ of the main-object and the sub-object as keys.

The second object feature amount acquisition unit 109 inputs the image Xe (unlabeled data 39) to the object detector 121 (od), and extracts the second object feature amount 40 (h'ₛᵢ) corresponding to the object label lₛᵢ in the image Xe from an output of the object detector 121 (od) (step S15). In a case where a plurality of second object feature amounts 40 (h'ₛᵢ) exist, the second object feature amount acquisition unit 109 may select the second object feature amount 40 (h'ₛᵢ) at random.

The control unit 100 inputs the second object feature amount 40 (h'ₛᵢ), the first object feature amount (hₒᵢ), and the position information bₛᵢ and bₒᵢ to the encoder 143 (f_{φ}) as the object feature amounts of the main-object and the sub-object. The control unit 100 calculates the second latent vector 62b, which is the feature vector Zᵢ, based on an output of the encoder 143 (f_{φ}) (step S16). The second object feature amount 40 (h'ₛᵢ), the first object feature amount (hₒᵢ), and the position information bₛᵢ and bₒᵢ are examples of the second data 42. The second data 42 is data in which at least one of the first object feature amount hₛᵢ or hₒᵢ in the first data 41 is substituted. Meanwhile, the second data 42 maintains the position information bₛᵢ and bₒᵢ in the first data 41.

A first latent vector Zi = f_{φ}(hₛᵢ, hₒᵢ, bₛᵢ, bₒᵢ)

A first latent vector Z'i = f_{φ}(h'ₛᵢ, hₒᵢ, bₛᵢ, bₒᵢ)

The control unit 100 determines whether or not the calculation of the feature vector is completed for all the pairs (step S17). In a case where the feature vector is not calculated for all the pairs (see No route in step S17), the process may return to the process of step S13. In a case where the calculation of the feature vector is completed for all the pairs (see Yes route of step S17). The process proceeds to step S18.

The encoder optimization unit 110 calculates a loss function E_{x~p(x)}[-sim(Z, Z')], and updates a parameter φ such that the value thereof is minimized (step S18).

φ = argmin(E_{x~p(x)}[-sim(Z, Z')]) where Z = (z₁, z₂, ..., zᵢ, ..., and z_{Nmax}), Z' = (z₁', z₂', ..., zᵢ', ..., and z_{Nmax}'). Meanwhile, argmin means a function for acquiring the parameter φ that gives the minimum value.

The control unit 100 repeats the process of steps S11 to S19 until the process converges (see No route in step S19). The control unit 100 waits for the process to converge (see Yes route of step S19), and ends the training process of the encoder 143 in the training phase.

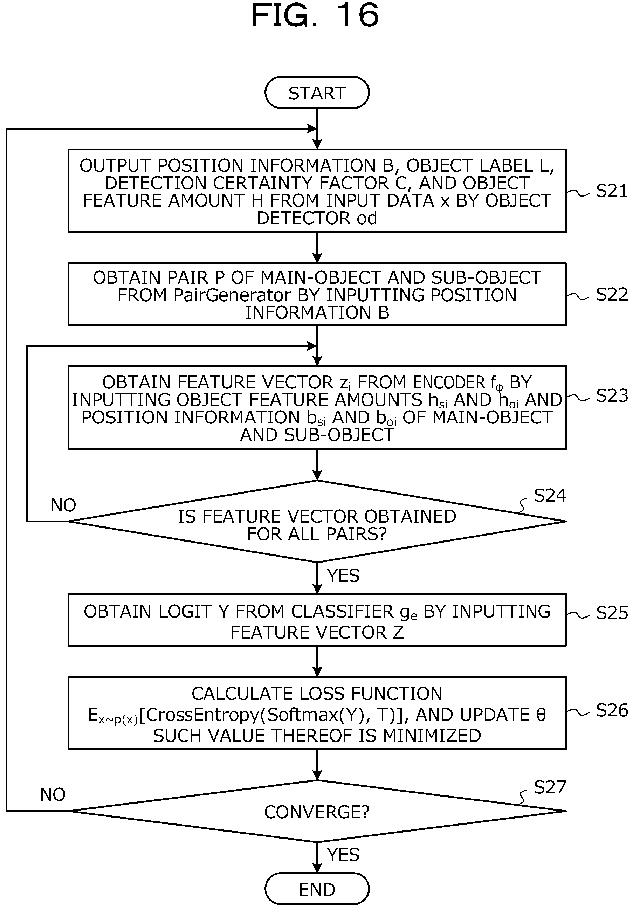

An example of a training process of the classifier 144 in the training phase of the information processing apparatus 1 illustrated in FIG. 2 will be described with reference to a flowchart (steps S21 to S27) illustrated in FIG. 16. Step S21 is the same as step S11 in FIG. 15.

The position information B is input to the pair creation unit 106 (PairGenerator). The pair creation unit 106 generates the pair P of a main-object and a sub-object from the target objects 32 (step S22).

### P = PairGenerator(B)

P = (P₁, P₂, ..., Pᵢ, ..., and P_{Nmax}) where Pᵢ = (sᵢ, oᵢ)

sᵢ represents an index of the main-object of the i-th pair, and oᵢ represents an index of the sub-object of the i-th pair.

The control unit 100 generates the pair P of the main-object and the sub-object from among the plurality of target objects 32 (step S12). The first object feature amounts hₛᵢ and hₒᵢ of the main-object and the sub-object and the position information bₛᵢ and bₒᵢ are input to the encoder 143. The latent vector 62 (feature vector) that is the feature vector Zᵢ is calculated from the encoder 143 (f_{φ}) (step S23).

A latent vector Zi = f_{φ}(hₛᵢ, hₒᵢ, bₛᵢ, bₒᵢ)

In a case where there is a pair P for which the latent vector (feature vector) is not calculated (No route of step S24), the process returns to step S23. The feature vector Z is input to the classifier 144 (g_{θ}) after waiting for the calculation of the latent vector (feature vector) for all the pairs P (Yes route of step S24). A logit Y is calculated from an output of the classifier 144 (g_{θ}) (step S25).

The logit Y = g_{θ}(Z) where Z = (Z₁, Z₂, ..., Zᵢ, ..., and Z_{Nmax})

The classifier optimization unit 112 calculates the loss function E_{x~p(x)} based on the following expression. φ = argmin(E_{x~p(x)}[CrossEntropy(Softmax(Y), T]). Meanwhile, T is a correct answer relationship label. The logit Y is converted into a prediction value of class classification of the relationship label by using the Softmax function or the like. Then, a distance between the prediction value and the correct answer relationship label is calculated by the CrossEntropy function. Then, the parameter θ is updated by the argmin function such that the distance between the prediction value and the correct answer relationship label is minimized (step S26).

The control unit 100 repeats the process of steps S21 to S27 until the process converges (see No route of step S27). The control unit 100 waits for the process to converge (see Yes route of step S27), and ends the training process of the classifier 144 in the training phase.

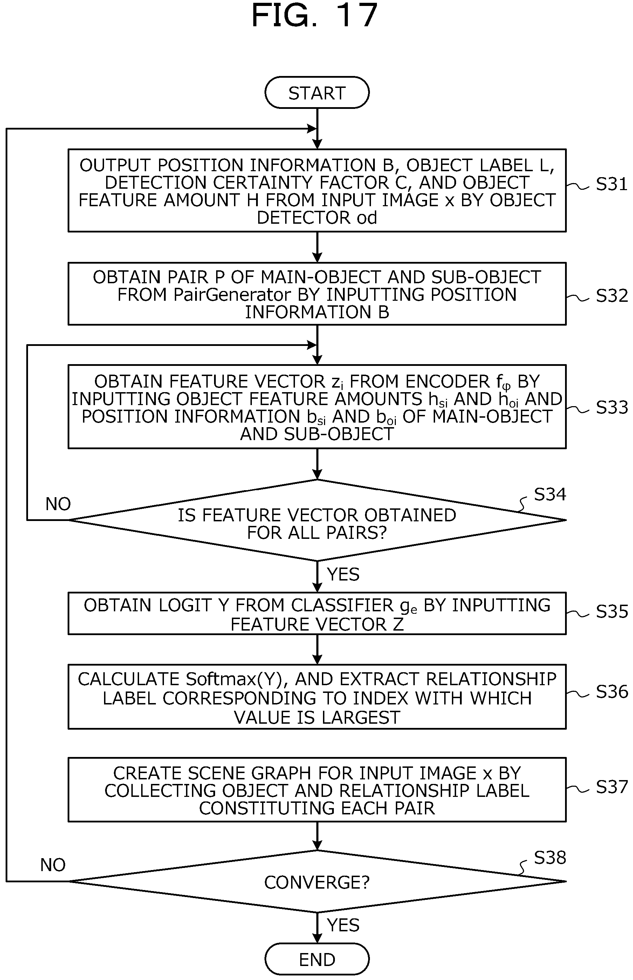

An example of a creation process of a scene graph in the inference phase of the information processing apparatus 1 illustrated in FIG. 2 will be described with reference to the flowchart (steps S31 to S38) illustrated in FIG. 17.

The input image acquisition unit 113 acquires input image data (input image x) of a processing target. The process of steps S31 to S35 has the same manner as the process of steps S21 to 25 of FIG. 16, except for a difference in the input data.

The relationship label acquisition unit 114 calculates a softmax value softmax(Y) of the logit Y to extract a relationship label corresponding to an index (subscript) with which a value of softmax(Y) is the largest (step S36).

The scene graph creation unit 115 creates the scene graph 300 for the input image by collecting an object label and a relationship label constituting each pair (step S37). In a case where the process is not collected, the process returns to step S31 (see No route of step S38). The control unit 100 waits for the process to be collected (see Yes route of step S38), and the creation process of the scene graph in the inference phase is completed.

### [C] Effects

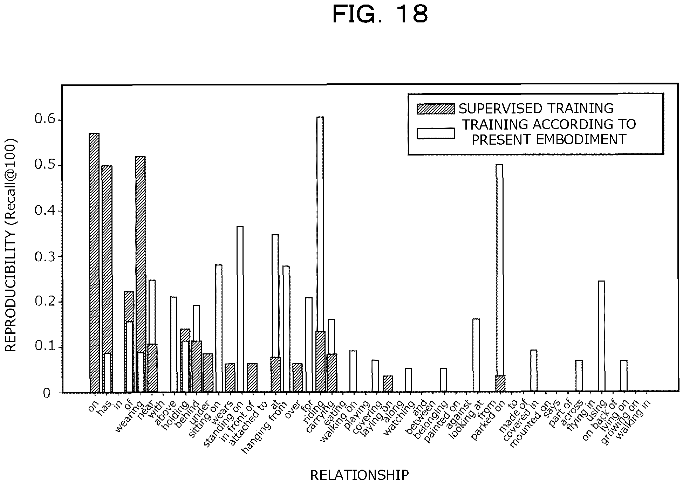

FIG. 18 is a diagram illustrating an example of a result of a reproducibility of a relationship label by the information processing apparatus 1 illustrated in FIG. 2. In a case where the encoder 143 is trained by the technology in the related art (supervised learning) of FIG. 1, a reproducibility, which is the degree to which the encoder 143 can reproduce a correct relationship label, is high in a case of an abstract relationship and is low in a case of a specific relationship. On the other hand, in a case of the present embodiment using contrastive learning, a reproducibility of a relationship label can be further improved even in the case of the specific relationship, and a bias of class distribution of the relationship label is relaxed. In particular, the reproducibility of the specific relationship label can be enhanced, as compared with a case of the technology in the related art. Therefore, in a case of creating the scene graph 300, the scene graph 300 having improved expression power can be created.

According to the example of the embodiment described above, for example, the following action and effect can be exhibited.

The control unit 100 acquires the first data 41 including each of the first object feature amounts 37a and 37b and the position information 36a and 36b of the plurality of target objects 32a and 32b in first image data. The control unit 100 generates at least one second data 42 by substituting at least one of the first object feature amounts 37a and 37b of the plurality of target objects 32a and 32b in the first data 41 with the second object feature amount 40. The second object feature amount 40 is an object feature amount acquired for at least one other object classified into the same class as the target object in at least one second image data different from the first image data. The control unit 100 inputs at least one of the second data 42 to the encoder 143 to train the encoder 143.

As a result, classification accuracy of the relationship can be improved by reflecting the specific relationship between the plurality of target objects 32a and 32b in the image data.

In the process of training the encoder 143, the control unit 100 inputs the first data 41 and the second data 42 to the encoder 143 to train the encoder 143.

As a result, the existing labeled data 30 can be used as training data of the encoder 143, and the unlabeled data 39 can be acquired and used. Therefore, the encoder 143 can be trained by the training data having a variety. Therefore, training accuracy is increased.

In the process of training the encoder 143, the control unit 100 performs machine learning to increase a coincidence degree between the first relationship feature amount (first latent vector Z) and the second relationship feature amount (second latent vector Z'). The first relationship feature amount is a feature amount related to a relationship between the plurality of target objects 32a and 32b, and is obtained by inputting the first data 41 to the encoder 143. The second relationship feature amount is a feature amount related to a relationship between the plurality of target objects 32a and 32b, and is obtained by inputting the second data 42 to the encoder 143.

As a result, it is possible to improve the classification accuracy of the relationship by reflecting the specific relationship between the plurality of target objects in the image data.

The control unit 100 acquires the first object feature amounts 37a and 37b and the position information 36a and 36b by inputting the first image data to the trained object detector 121. The control unit 100 acquires the second object feature amount 40 by inputting the second image data to the trained object detector 121.

As a result, classification accuracy of the relationship can be improved by reflecting the specific relationship between the plurality of target objects 32a and 32b in the image data.

### [D] Others

The disclosed technology is not limited to the embodiments described above, and can be variously modified and implemented without departing from the spirit of the present embodiment. Each configuration and each process of the present embodiment may be optionally selected or appropriately combined.

### Reference Signs List

- 1: information processing apparatus
- 11: processor
- 12: memory unit
- 13: display control unit
- 130: display device
- 14: storage device
- 15: input IF
- 151: mouse
- 152: keyboard
- 16: external recording medium processing unit
- 160: recording medium
- 17: communication IF
- 100: control unit
- 101: labeled data acquisition unit
- 102: object label acquisition unit
- 103: position information acquisition unit
- 104: detection certainty factor acquisition unit
- 105: first object feature amount acquisition unit
- 106: pair creation unit
- 108: unlabeled data acquisition unit
- 109: second object feature amount acquisition unit
- 110: encoder optimization unit
- 111: second and third object feature amount acquisition unit
- 112: classifier optimization unit
- 113: input image acquisition unit
- 114: relationship label acquisition unit
- 115: scene graph creation unit
- 121: object detector
- 122: object feature amount extractor
- 143: encoder
- 144: classifier

## Claims

1. A training program causing a computer to execute a process comprising:
generating, for first data that includes a first object feature amount and position information of each of a plurality of target objects in first image data, at least one second data by substituting at least one first object feature amount of the plurality of target objects with a second object feature amount acquired for at least one other object classified into a same class as the target object in at least one second image data that is different from the first image data; and
training an encoder by inputting the at least one second data to the encoder.

2. The training program according to claim 1,
wherein in the process of training the encoder, the training program causes the computer to execute a process of
training the encoder by inputting the first data and the second data to the encoder.

3. The training program according to claim 2,
wherein in the process of training the encoder, the training program causes the computer to execute a process of
performing machine learning to increase a coincidence degree between a first relationship feature amount for a relationship between the plurality of target objects, which is obtained by inputting the first data to the encoder, and a second relationship feature amount for the relationship between the plurality of target objects, which is obtained by inputting the second data to the encoder.

4. The training program according to any one of claims 1 to 3,
wherein the training program causes the computer to execute a process of
acquiring the first object feature amount and the position information by inputting the first image data to a trained object detector, and
acquiring the second object feature amount by inputting the second image data to the trained object detector.

5. A training method causing a computer to execute a process comprising:
generating, for first data that includes a first object feature amount and position information of each of a plurality of target objects in first image data, at least one second data by substituting at least one first object feature amount of the plurality of target objects with a second object feature amount acquired for at least one other object classified into a same class as the target object in at least one second image data that is different from the first image data; and
training an encoder by inputting the at least one second data to the encoder.

6. The training method according to claim 5,
wherein in the process of training the encoder, the training program causes the computer to execute a process of
training the encoder by inputting the first data and the second data to the encoder.

7. The training method according to claim 6,
wherein in the process of training the encoder, the training program causes the computer to execute a process of
performing machine learning to increase a coincidence degree between a first relationship feature amount for a relationship between the plurality of target objects, which is obtained by inputting the first data to the encoder, and a second relationship feature amount for the relationship between the plurality of target objects, which is obtained by inputting the second data to the encoder.

8. The training method according to any one of claims 5 to 7,
wherein the training program causes the computer to execute a process of acquiring the first object feature amount and the position information by inputting the first image data to a trained object detector, and
acquiring the second object feature amount by inputting the second image data to the trained object detector.

9. An information processing apparatus comprising:
a processor configured to:
generate, for first data that includes a first object feature amount and position information of each of a plurality of target objects in first image data, at least one second data by substituting at least one first object feature amount of the plurality of target objects with a second object feature amount acquired for at least one other object classified into a same class as the target object in at least one second image data that is different from the first image data; and
train an encoder by inputting the at least one second data to the encoder.

10. The information processing apparatus according to claim 9,
wherein in the process to train the encoder, the processor trains the encoder by inputting the first data and the second data to the encoder.

11. The information processing apparatus according to claim 10,
wherein in the process to train the encoder, the processor performs machine learning to increase a coincidence degree between a first relationship feature amount for a relationship between the plurality of target objects, which is obtained by inputting the first data to the encoder, and a second relationship feature amount for the relationship between the plurality of target objects, which is obtained by inputting the second data to the encoder.

12. The information processing apparatus according to any one of claims 9 to 11,
wherein the processor:
acquires the first object feature amount and the position information by inputting the first image data to a trained object detector, and
acquires the second object feature amount by inputting the second image data to the trained object detector.
